# EUROPEAN PATENT SPECIFICATION

(11) **EP 0 664 389 B1**
(45) Date of publication and mention of the grant of the patent: **30.07.1997**
(21) Application number: 95300086.6
(22) Date of filing: 05.01.1995
(51) Int. Cl.: F02M 35/024, B01D 46/24

(54) **Heavy duty air filter assembly**
Hochleistungsluftfilteranordnung
Dispositif filtre à air à haute performance

(30) Priority: 21.01.1994 GB 9401094
(43) Date of publication of application: 26.07.1995
(73) Proprietor: Coopers Filters Limited, Abergavenny Gwent NP7 9LW South Wales (GB)
(72) Inventor: Gladstone, Robert, Abergavenny, Gwent NP7 6PS, South Wales (GB)
(74) Representative: Allen, William Guy Fairfax

(56) References cited:
- EP-A- 0 232 640
- EP-A- 0 423 435
- FR-A- 1 319 415
- FR-A- 2 063 849
- FR-A- 2 268 551
- GB-A- 799 119
- GB-A- 880 812
- GB-A- 885 767
- US-A- 5 207 811

## Description

This invention relates to heavy duty air filter assemblies especially but not exclusively for use in vehicles fitted with internal combustion engines.

Almost all internal combustion engines in land vehicles are fitted with an intake air filter assembly.

In a large modern commercial vehicle fitted with an internal combustion engine it is usual to provide an externally mounted air filter assembly. Typically such an assembly may comprise a generally cylindrical housing having a fixed base at the lower end of the cylinder and a removable cover at the upper end. A generally cylindrical or frusto-conical replaceable filter element is retained within the housing, usually coaxially therewith such that a flow path is provided for air entering through a port in the cylindrical wall to the region between the cylindrical wall and the filter, inwardly via the walls of the filter and outwardly via a central delivery port of the base. In known arrangements sealing between the filter element and the base is achieved by an annular end seal maintained by compressive force between the removable cover and the base. Alternatively in order to avoid the need for substantial compressive force between the cover and the base, it has been proposed to provide for a radial seal between the filter element and an annular cylindrical surface carried by the base portion. Such an arrangement may provide the added advantage of some tolerance of axial movement allowing for easier sealing of the removable cover and for some differential thermal expansion and contraction between the housing and the filter element.

However, although advantageous, the above mentioned radial seal between the filter element and a cylindrical surface carried by the base portion does impose a requirement for substantial radial compressive forces to maintain the seal integrity and in order to impart such forces the filter element still needs to be constructed relatively rigidly to permit pressing into position from the open end of the housing without causing twisting or buckling of the filter pleats. This will usually dictate the provision of a centre tube which is integral with the ends of the filter element.

By way of example, GB-A-880812 shows a filter assembly, in Figure 12, in which a soft flexible gasket is secured directly to the paper filter element itself and engaged in a parallel sided groove. This is maintained by compressive force between the removable cover and the base of the housing.

A somewhat improved concept is disclosed in FR-A-2063849 in which the filter assembly comprises a housing, a base and side walls forming said housing, a removable cover to said housing, a relatively rigid annular filter element mounted in said housing, an air inlet to said housing externally of said filter element, a delivery port internally of said filter element, said filter assembly further comprising an annular inner side wall and an annular outer side wall disposed radially outwardly and concentric with said inner side wall, said inner and outer side walls being substantially parallel, to form a substantially parallel sided annular groove on said housing, said filter element comprising an annular paper filter element, an internal mesh liner within said paper element, and moulded end caps connected to said paper filter element and to said mesh liner at each end of said filter element, one of said moulded end caps being an annular end cap and further comprising an outwardly extending integral projection.

The object of the present invention is to provide an improved filter assembly which avoids the need to impose such high twisting or buckling forces during the putting together or servicing of the assembly.

The filter assembly according to the present invention is characterised in that said paper filter element is an elongate filter element, in that the inner side wall extends through said base and forms said delivery port, and in that said projection is radially resiliently deformable, said projection having substantially parallel radially inner and outer walls engaging the inner and outer walls surfaces of said groove respectively.

The filter element may be a conventional cylindrical or frusto-conical annular filter element, preferably with an internal metal mesh liner.

The structure of the present invention is very advantageous insofar as a complete seal is provided between the annular projection and the groove and if there is any radial expansion or contraction, e.g. due to thermal stresses, the outer side wall of the groove will expand and contract and will maintain the inner wall surface of the projection against the inner side wall of the groove thereby ensuring good sealing.

Depending on the material from which the filter is made, the annular projection preferably has an axial length of between 2½% and 5% of the axial length of the filter element and preferably between 3% and 4%. Such a size will enable the sealing to be maintained even though the housing may expand and contract significantly due to thermal changes.

GB-A-885767 disclosed a filter element for use in a filter assembly, including a housing with a removable cover, said filter element being a relatively rigid elongate annular paper filter element, an internal supporting casing to said filter element, a moulded end cap at each axial end of the filter element, moulded to said paper filter element and to said support casing, one of said end caps being an annular end cap, an axially extending annular projection formed integrally with said one annular end cap.

The filter element according to the present invention is characterised in that said supporting casing is a mesh liner, in that said projection is a radially resilient projection having substantially parallel inner and outer wall surfaces, adapted to engage in an annular groove in an end wall of the filter housing, said projection having an axial length between 2½% and 5% of the axial length of said filter element.

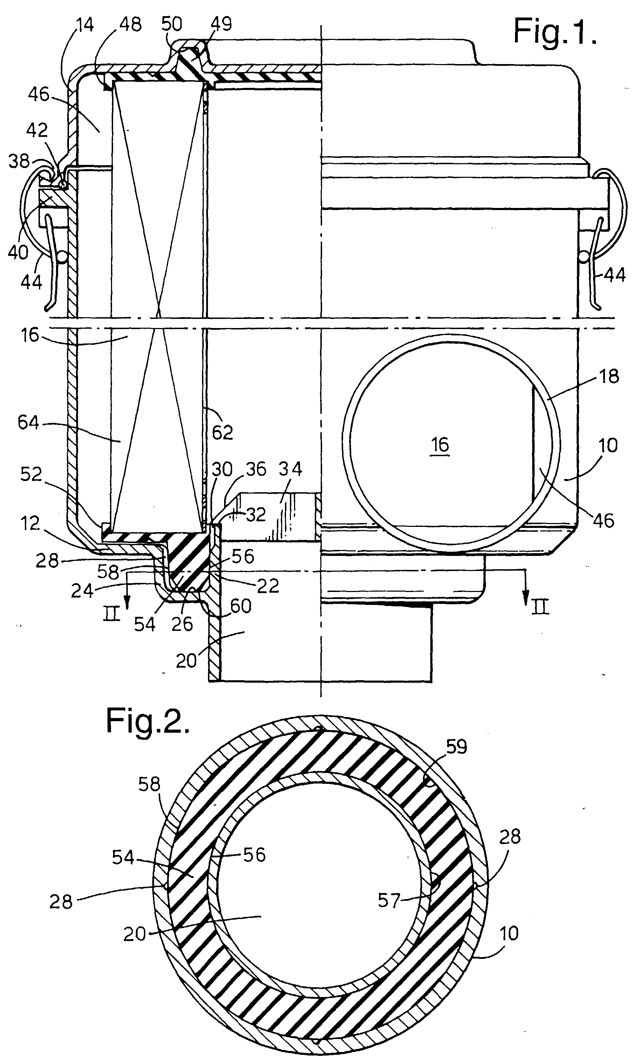

In order that the present invention may more readily be understood, the following description is given, merely by way of example, reference being made to the accompanying drawing in which:-
Figure 1 is a side elevation, partly in section, of one embodiment of filter according to the invention; and
Figure 2 is a section taken along the line II-II of Figure 1.

A generally cylindrical moulded thermoplastic, e.g. polypropylene filter housing 10 has an integrally moulded lower base 12 and a removable moulded cover 14 of a similar material between which is mounted a generally cylindrical, annular, pleated paper filter element 16. A tangential air inlet port 18 is connected to the lower part of the housing 10 and the base 12 has a central downwardly extending air delivery port 20 which continues upwardly above the base 12 into the interior of the housing to form an inner annular wall 22. It will be noted that the base 12 is stepped so as to provide, between the inner wall 22 and an outer wall 24 forming the step, an annular groove 26. This groove includes a number (one or more and as illustrated four) axially extending venting grooves 28 extending from the base of the groove 26 to the main base 12 of the housing 10.

Further axially extending grooves 30 may be formed on the outer surface of the upper portion of the inner annular wall 22, to the top 32 of which may be mounted cross-ribs 34 which are chamfered at 36.

The cover 14 is provided with an annular flange 38 which engages a complementary flange 40 just below the top of the housing, with an optional O-ring 42 being inserted therebetween. The cover 14 is held in position by means of simple clips 44, thereby forming a sealed enclosure, the annular inlet region 46 of which communicates with the inlet port 18, this being separated from the delivery port 20 by the filter element 16.

This filter element is a mainly conventional pleated paper element, but in the present example the upper ends of the pleats are sealingly embedded in an end cap 48, typically formed of polyurethane, having an annular bead 49, which is engageable in an annular recess 50 of the cover. The cover may be separate from or effectively integral with this annular end plate 48 in which case the cover would be replaceable with the filter element when required.

The lower end of the filter element 16 is similarly embedded in an annular moulded end cap 52 formed of a relatively soft polyurethane having an integral radially resiliently deformable projection 54 which is dimensioned completely to fill the annular groove 26. The annular projection 54 has a substantially parallel radially inner and outer wall surfaces 56,58 and an end surface 60. There is in fact a very slight taper towards the end surface 60 of the inner and outer surfaces 56,58 to facilitate moulding. The inner surface 56 is just radially inwardly of the conventional mesh liner element 62 constraining the inner surface of the annular paper filter material 64. This mesh liner may be formed of metal or plastic.

Assembly is relatively straight forward. When the filter element 16 is introduced, either already connected to the cover 14, or before the cover 14 is put in place, the annular projection 54 is guided by the chamfer 36 on the cross-ribs 34 (if provided) and by the ridges formed between the axial grooves 30 so that it engages into the annular groove 26, which has substantially parallel inner and outer walls 57,59 engaged by said wall surface 56,58 respectively. Again the walls 57,59 are slightly tapered downwardly. Clearly because the annular projection 54 substantially fills the groove 26 there will be a need to displace air within this groove during this insertion step and it is for this reason that the axial venting grooves 28 are provided.

While other forms of venting are contemplated, e.g. on the inner annular wall 22 and to the exterior through the bottom, the illustrated structure of the grooves 28 on the inner surface of the outer wall 24 are preferred. This arrangement allows the air to escape readily and does not allow the ingress of any dirt.

When the clips 44 are engaged on the flanges 38,40, the projection 54 will be firmly pressed into the groove 26 thereby providing a good seal. If there is any thermal or other expansion and contraction, then the outer wall 24 forming the groove 26 will expand and contract with the inner wall 22 and thus will maintain a good air tight seal between the lower part of the filter element 16 and the housing 10. Because the grid element 62 is not outwardly displaced significantly from the inner surface 56 (as is conventional) a thorough and full usage of the sealing element is achieved and problems of expansion and contraction are overcome.

It is important that the annular projection 54 should have a significant axial length to ensure that there is no chance of disengagement from the groove 26. Quite clearly these filter elements are subject to very different climatic conditions and there will be quite a measure of expansion and contraction of the housing. With this in mind, the axial extent of the inner surface 56 of the projection 54 should be between 2½% and 5% of the axial length of the filter element and preferably between 3% and 4%.

The provision of the chamfer 36 and the axial grooves 30 (if provided) associated with the inner wall 22 and the axial grooves 28 associated with the outer wall 24 of the groove 26 not only facilitates insertion of the filter element, but also facilitates removal by avoiding sticking.

In an alternative assembly, the filter element 16 may be constructed to have an end cap and projecting part similar to that at the bottom, at both ends, the cover being moulded to provide an annular groove of similar dimensions to the groove 26.

In yet another alternative, the upper end of the filter element may be formed with an end closure which simply rests in a locating and abutting formation moulded within the cover. In this and the previous alternative, the end cover does not normally need to be replaced with a filter element on servicing the assembly.

In a still further construction, at least the filter element end cap at the lower (outlet) end may be provided with an annular groove presenting radially opposing annular sealing faces which cooperate with a resiliently deformable projection carried by the respective internal end surface of the housing. However, the structure as illustrated is greatly preferred because it would be relatively expensive to provide such a resiliently deformable projection on the housing and possibly also the cover.

In a yet a further construction, the respective end caps of the filter element and the base of the housing may carry annular grooves which receive opposite ends of a replaceable moulded annular resilient flexible seal.

## Claims

1. A filter assembly comprising a housing (10), a base (12) and side walls forming said housing, a removable cover (14) to said housing, a relatively rigid annular filter element (16) mounted in said housing, an air inlet (18) to said housing externally of said filter element, a delivery port (20) internally of said filter element, said filter assembly further comprising an annular inner side wall (22) and an annular outer side wall (24) disposed radially outwardly and concentric with said inner side wall, said inner and outer side walls (22,24) being substantially parallel, to form a substantially parallel sided annular groove (26) on said housing, said filter element comprising an annular paper filter element (64), an internal mesh liner (62) within said paper element, and moulded end caps (48,52) connected to said paper filter element and to said mesh liner at each end of said filter element, one of said moulded end caps (52) being an annular end cap and further comprising an outwardly extending integral projection (54), characterised in that said paper filter element (16) is an elongate filter element, in that the inner side wall (22) extends through said base and forms said delivery port (20), and in that said projection (54) is radially resiliently deformable, said projection having substantially parallel radially inner and outer walls (56,58) engaging the inner and outer walls surfaces (57,59) of said groove (26) respectively.

2. A filter assembly as claimed in claim 1, characterised in that annular projection has an axial length of between 2½% and 5% of the total axial length of the filter element.

3. A filter assembly as claimed in claim 1 or 2, characterised in that said inner wall (22) further comprises cross-ribs (34) mounted thereon, and chamfers (36) on said cross-ribs effective to guide said annular projection into said annular groove.

4. A filter assembly as claimed in claim 1, 2 or 3, characterised in that one annular end cap (52) extends within said mesh liner to an extent whereby said mesh liner is disposed not significantly outwardly of the inner surface of said annular projection.

5. A filter element (16) for use in a filter assembly, including a housing (10) with a removable cover (14), said filter element (16) being a relatively rigid elongate annular paper filter element (64), an internal supporting casing (62) to said filter element, a moulded end cap (48,52) at each axial end of the filter element, moulded to said paper filter element and to said support casing, one of said end caps (52) being an annular end cap, an axially extending annular projection (54) formed integrally with said one annular end cap, characterised in that said supporting casing is a mesh liner (62), in that said projection is a radially resilient projection having substantially parallel inner and outer wall surfaces (56,58), adapted to engage in an annular groove in an end wall of the filter housing (10), said projection having an axial length between 2½% and 5% of the axial length of said filter element.

6. A filter element according to claim 5, characterised in that said one annular end cap (52) extends within said mesh liner (62) to an extent whereby said mesh liner is disposed not significantly radially outwardly of the inner surface (56) of the annular projection (54).

7. A filter element as claimed in claim 5 or 6, characterised in that said inner wall wall surface (56) of the annular projection (54) forms an axial extension of the inner diameter of the annular end cap (52).

## Patentansprüche

1. Eine Filteranordnung, aufweisend: ein Gehäuse (10), eine Basis (12) und Seitenwände, welche das Gehäuse bilden, eine abnehmbare Abdeckung (14) an dem Gehäuse, ein verhältnismäßig starres ringförmiges Filterelement (16), das in dem Gehäuse angebracht ist, einen Lufteinlaß (18) an dem Gehäuse außerhalb des Filterelements und eine Auslaßöffnung (20) innerhalb des Filterelements, wobei die Filteranordnung ferner eine ringförmige innere Seitenwand (22) und eine ringförmige äußere Seitenwand (24) aufweist, welche radial auswärts und konzentrisch mit der inneren Seitenwand angeordnet ist, wobei die innere Seitenwand (22) und die äußere Seitenwand (24) im wesentlichen parallel sind, um eine im wesentlichen parallelseitige ringförmige Nut (26) an dem Gehäuse zu bilden, wobei das Filterelement aufweist: ein ringförmiges Papierfilterelement (64), eine innere Mascheneinlage (62) innerhalb des Papierelements und geformte Endkappen (48, 52), die mit dem Papierfilterelement und mit der Mascheneinlage an jedem Ende des Filterelements verbunden sind, wobei eine der geformten Endkappen (52) eine ringförmige Endkappe ist und weiterhin einen sich nach auswärts erstreckenden, einstückigen Vorsprung (54) aufweist, **dadurch gekennzeichnet,** daß das Papierfilterelement (16) ein langgestrecktes Filterelement ist, daß die innere Seitenwand (22) sich durch die Basis erstreckt und die Auslaßöffnung (20) bildet und daß der Vorsprung (54) radial federnd nachgiebig deformierbar ist, wobei dieser Vorsprung eine über den Umfang verlaufende innere Wand (56) und eine über den Umfang verlaufende äußere Wand (58) aufweist, wobei diese Wände (56, 58) parallel sind und wobei die innere Wand (56) an der inneren Wandfläche (57) der genannten Nut (26) bzw. die äußere Wand (58) an der äußeren Wandfläche (59) der genannten Nut (26) angreift.

2. Eine Filteranordnung, wie in Anspruch 1 beansprucht, **dadurch gekennzeichnet,** daß der ringförmige Vorsprung eine axiale Länge zwischen 2 1/2% und 5% der gesamten axialen Länge des Filterelements aufweist.

3. Eine Filteranordnung, wie in Anspruch 1 oder 2 beansprucht, **dadurch gekennzeichnet,** daß die genannte innere Wand (22) weiterhin hieran angebrachte Querrippen (34) und Abschrägungen (36) an den genannten Querrippen aufweist, wobei diese Abschrägungen (36) wirksam sind, um den genannten ringförmigen Vorsprung in die genannte ringförmige Nut zu führen.

4. Eine Filteranordnung, wie in Anspruch 1, 2 oder 3 beansprucht, **dadurch gekennzeichnet,** daß sich eine ringförmige Endkappe (52) innerhalb der genannten Mascheneinlage bis zu einem Ausmaß erstreckt, so daß die genannte Mascheneinlage nicht erheblich außerhalb der inneren Fläche des genannten ringförmigen Vorsprunges angeordnet ist.

5. Ein Filterelement (16) zur Verwendung in einer Filteranordnung, mit einem Gehäuse (10) mit einer abnehmbaren Abdeckung (14), wobei das Filterelement (16) ein verhältnismäßig starres langgestrecktes ringförmiges Papierfilterelement (64) ist, mit einem inneren Traggehäuse (62) an dem Filterelement, einer geformten Endkappe (48, 52) an jedem axialen Ende des Filterelements, wobei die geformte Endkappe an das Papierfilterelement und an das Traggehäuse angeformt ist, wobei eine der Endkappen (52) eine ringförmige Endkappe ist und wobei ein sich axial erstreckender ringförmiger Vorsprung (54) einstückig mit der genannten einen ringförmigen Endkappe ausgebildet ist, **dadurch gekennzeichnet,** daß das genannte Traggehäuse eine Mascheneinlage (62) ist und daß der genannte Vorsprung ein in Radialrichtung federnd nachgiebiger Vorsprung mit einer inneren Wandfläche (56) und einer äußeren Wandfläche (58) ist, wobei diese Wandflächen (56, 58) im wesentlichen parallel zueinander verlaufen und dazu befähigt sind, in eine ringförmige Nut in einer Endwand des Filtergehäuses (10) einzugreifen, und wobei der genannte Vorsprung eine axiale Länge zwischen 2 1/2% und 5% der axialen Länge des Filterelements aufweist.

6. Ein Filterelement nach Anspruch 5, **dadurch gekennzeichnet,** daß die genannte eine ringförmige Endkappe (52) sich innerhalb der genannten Mascheneinlage (62) bis zu einem Ausmaß erstreckt, so daß die genannte Mascheneinlage nicht beträchtlich radial außerhalb der inneren Fläche (56) des ringförmigen Vorsprungs (54) angeordnet ist.

7. Ein Filterelement, wie in Anspruch 5 oder 6 beansprucht, **dadurch gekennzeichnet,** daß die genannte innere Wandfläche (56) des ringförmigen Vorsprungs (54) eine axiale Erstreckung des inneren Durchmessers der ringförmigen Endkappe (52) bildet.

## Revendications

1. Ensemble de filtre comprenant un boîtier (10), une base (12) et des parois latérales formant ledit boîtier, un capot amovible (14) pour ledit boîtier, un élément filtrant annulaire relativement rigide (16) monté dans le boîtier, une entrée d'air (18) pour ledit boîtier à l'extérieur dudit élément filtrant, un orifice de sortie (20) à l'intérieur dudit élément filtrant, ledit ensemble de filtre comprenant en outre une paroi latérale intérieure annulaire (22) et une paroi latérale extérieure annulaire (24) disposée radialement à l'extérieur de et concentriquement à ladite paroi latérale intérieure, lesdites parois latérales intérieure et extérieure (22, 24) étant sensiblement parallèles, pour former une gorge annulaire (26) à côtés sensiblement parallèles dans ledit boîtier, ledit élément filtrant comprenant un élément filtrant annulaire en papier (64), un revêtement intérieur formant tamis (62) dans ledit élément en papier, et des capuchons d'extrémité moulés (48, 52) raccordés audit élément filtrant en papier et audit revêtement formant tamis à chaque extrémité dudit élément filtrant, l'un desdits capuchons d'extrémité moulés (52) étant un capuchon d'extrémité annulaire et comprenant en outre une partie saillante d'un seul tenant (54), qui s'étend vers l'extérieur, caractérisé en ce que ledit élément filtrant en papier (16) est un élément filtrant allongé, en ce que la paroi latérale (22) traverse ladite base et forme ledit orifice de sortie (20), et en ce que ladite partie saillante (54) est déformable élastiquement radialement, ladite partie saillante possédant des parois radialement intérieure et extérieure (56, 58) sensiblement parallèles et s'appliquant respectivement contre les surfaces (57, 59) des parois intérieure et extérieure de ladite gorge (26).

2. Ensemble de filtre selon la revendication 1, caractérisé en ce que la partie saillante annulaire a une longueur axiale comprise entre 2 ½ % et 5 % de la longueur axiale totale de l'élément filtrant.

3. Ensemble de filtre selon la revendication 1 ou 2, caractérisé en ce que ladite paroi intérieure (22) comprend en outre des nervures transversales (34) formées sur ladite paroi, et des chanfreins (36) formés sur lesdites nervures transversales et aptes à guider ladite partie saillante annulaire dans ladite gorge annulaire.

4. Ensemble de filtre selon la revendication 1, 2 ou 3, caractérisé en ce qu'un capuchon d'extrémité annulaire (52) s'étend à l'intérieur dudit revêtement formant tamis à un degré tel que ledit revêtement formant tamis est disposé de manière à ne pas s'étendre beaucoup à l'extérieur de la surface intérieure de ladite partie saillante annulaire.

5. Elément filtrant (16) destiné à être utilisé dans un ensemble de filtre, comprenant un boîtier (10) pourvu d'un capot amovible (14), ledit élément filtrant (16) étant un élément filtrant annulaire allongé en papier (64) relativement rigide, un logement de support intérieur (62) pour ledit élément filtrant, un capuchon d'extrémité moulé (48, 52) situé sur chaque extrémité axiale de l'élément filtrant, moulé sur ledit élément filtrant en papier et sur ledit logement de support, un desdits capuchons d'extrémité (52) étant un capuchon d'extrémité annulaire, une partie saillante annulaire (54) qui s'étend axialement et est formée d'un seul tenant avec ledit capuchon d'extrémité annulaire, caractérisé en ce que ledit logement de support est un revêtement formant tamis (62), en ce que ladite partie saillante est une partie saillante élastique radialement, comportant des surfaces de parois intérieure et extérieure sensiblement parallèles (56, 58) et adaptée pour s'engager dans une gorge annulaire dans une paroi d'extrémité du boîtier de filtre (10), ladite partie saillante ayant une longueur axiale comprise entre 2 ½ % et 5 % de la longueur axiale dudit élément filtrant.

6. Elément filtrant selon la revendication 5, caractérisé en ce que ledit capuchon d'extrémité annulaire (52) s'étend à l'intérieur dudit revêtement formant tamis (62) à un degré tel que ledit revêtement formant tamis est disposé de manière à ne pas s'étendre beaucoup radialement à l'extérieur de la surface intérieure (56) de la partie saillante annulaire (54).

7. Elément filtrant selon la revendication 5 ou 6, caractérisé en ce que ladite surface de paroi intérieure (56) de la partie saillante annulaire (54) forme une extension axiale du diamètre intérieur du capuchon d'extrémité annulaire (52).
